# EUROPÄISCHE PATENTSCHRIFT

(11) **EP 0 736 148 B1**
(45) Veröffentlichungstag und Bekanntmachung des Hinweises auf die Patenterteilung: **03.06.1998**
(21) Anmeldenummer: 95937878.7
(22) Anmeldetag: 07.11.1995
(51) Int. Cl.: F16F 3/10, B29C 55/16

(54) **STOSSDÄMPFERVORRICHTUNG FÜR LAUFWAGEN INSBESONDERE FÜR FOLIENRECKANLAGEN**
SHOCK ABSORBING SYSTEM FOR CARRIAGES ESPECIALLY IN FILM STRETCHING UNITS
SYSTEME D'AMORTISSEMENT DE CHOCS POUR CHARIOT, NOTAMMENT POUR DES UNITES D'ETIRAGE DE FEUILLES

(30) Priorität: 17.11.1994 DE 4441020
(43) Veröffentlichungstag der Anmeldung: 09.10.1996
(73) Patentinhaber: Brückner Maschinenbau GmbH, 83313 Siegsdorf (DE)
(72) Erfinder: LINDNER, Paul, A-5302 Henndorf (AT); RÜHLEMANN, Ulrich, D-83355 Grabenstätt (DE)
(74) Vertreter: Flach, Dieter Rolf Paul, Dipl.-Phys.
(86) Internationale Anmeldenummer: EP9504379
(87) Internationale Veröffentlichungsnummer: WO9616278

(56) Entgegenhaltungen:
- EP-A- 0 535 628
- BE-A- 446 506
- DE-U- 9 211 550
- GB-A- 1 041 912
- US-A- 2 889 056
- US-A- 4 830 347
- PATENT ABSTRACTS OF JAPAN vol. 008 no. 154 (M-310) ,18.Juli 1984 & JP,A,59 050240 (NISSAN JIDOSHA KK) 23.März 1984,

## Beschreibung

Die Erfindung betrifft einen Stoßdämpfer für Laufwagen insbesondere für Folienreckanlagen nach dem Oberbegriff des Anspruches 1.

Aus der US-PS 5 072 493 ist eine Simultan-Folienreckanlage bekannt geworden, bei der die einzelnen Lauf- oder Kluppenwagen ohne Verwendung von ansonst üblichen Kettenhebeln frei verfahrbar sind. Der Antrieb erfolgt hierbei durch einen Linearmotor.

Mittels der auf dem Laufwagen befindlichen Kluppen wird jeweils links und rechts der Folienrand ergriffen und die Folie dann entsprechend der Geometrie der Laufschienen in Quer- und Längsrichtung gestreckt. Dadurch wird der Abstand zwischen den Laufwagen zunehmend größer. In einer Auslaufzone kann der Abstand wieder geringfügig geringer werden, um hier in vordefiniertem Verhältnis eine gewisse Schrumpfung der Folienbahn durchzuführen.

Transportsysteme mit nicht durch Kettenhebel verbundenen Kluppen, d.h. Kluppen oder Laufwagen, weisen Bereiche auf, in denen sich die benachbarten Lauf- oder Kluppenwagen nicht berühren. Die Anforderung an diese Transportsysteme sind:
- ein exakter, reproduzierbarer Abstand der Kluppen beim Einführen der Folie (in diesem Bereich - dem sogenannten Stack - sind die Kluppenwagen auf Stoß zusammengefahren); und
- eine Kraftübertragung von Kluppe zu Kluppe, d.h. zum Antrieb und zur Vorschubbewegung der einzelnen Lauf-bzw. Kluppenwagen (die Vortriebs- und Rückhaltekräfte dürfen den Kluppenabstand bis hin zum Beginn der Streckzone nicht verändern).

Diese Anforderungen werden beim Stand der Technik durch feste Anschläge in der Kluppenstruktur erfüllt. Darüber hinaus sind auch Konstruktionen bekannt geworden, die einen Elastomerdämpfer mit geringem Arbeitshub und geringer Energieaufnahme aufweisen. Nachdem der Dämpfungshub des Elastomeres aufgebraucht ist, stoßen diese Kluppen ebenfalls mittels ihrer fest durch die Kluppenstruktur gebildeten Anschläge aufeinander. Im sogenannten Stack vor der eigentlichen Reckzone müssen die Dämpfer dann stets bis auf den Anschlag komprimiert werden, um einen vorbestimmten exakt einzuhaltenden Abstand von Kluppe zu Kluppe beim Ergreifen der Folie sicherzustellen.

Die vorstehend beschriebenen simultanen Reckanlagen unter Verwendung von nicht durch Kettenhebel verbundenen Kluppen- oder Laufwagen verursachen jedoch erhebliche Belastungen des gesamten Transportsystems:
- Bei normalem Betriebszustand stoßen die Kluppen mit geringer Differenzgeschwindigkeit aufeinander, z.B. bei der sogenannten Stack-Bildung (vor der Reckzone). Dabei belasten die harten metallischen Stöße zwischen den Kluppen sowohl die Laufrollen der Kluppenwägen wie aber auch die Schienen selbst. Selbst Kluppen mit großen Elastomerdämpfern können, aufgrund des stets vorhandenen Mißverhältnisses von Antriebskraft und unterschiedlichen Reibungsverlusten, die harten Stöße nicht ganz vermeiden.
- Bei Betriebsstörungen bzw. bei sich mit der Lebensdauer ungleichmäßig veränderndem Laufverhalten der Kluppen im Rücklauf können Kollisionen mit teilweise extremen Differenzgeschwindigkeiten auftreten, die zu erheblichen Schäden an Laufrollen, Schienen sowie der Kluppenstruktur selbst führen. Zumindest wird dadurch das feste Anschlagteil plastisch verformt, wodurch die Kluppenteilung (d.h. der exakte Abstand von Kluppe zu Kluppe im sog. Stack vor der Reckzone) verloren geht. Ein dadurch bedingter und sich auch nur geringfügig ändernder Abstand zwischen den Kluppen in dem sogenannten Sammelbereich (Stack-Bereich) vor der Reckzone führt dann aber, aufgrund des dadurch bedingten unerwünschten sich verändernden Reckverhältnisses, zu einer entsprechenden nachteiligen Beeinträchtigung bei der durch Reckung herzustellenden Kunststoffolienbahn.

Darüber hinaus ist eine ständige Tendenz festzustellen, die Anlagengeschwindigkeit, d.h. die Laufgeschwindigkeit der Lauf- oder Kluppenwagen stets noch weiter zu erhöhen. Damit werden aber die dynamischen Belastungen unzulässig hoch.

Eine Erhöhung der Energieaufnahme bei einigen bekannten Stoßdämpervorrichtungen aber auch mit anderen Konstruktionselementen der Federtechnik ist nicht möglich. Eine Erhöhung der Energieaufnahme der Elastomerdämpfer hätte nämlich zur Folge, daß bei zunehmend höheren Kräften die Elastomerdämpfer zunehmend stärker verformt werden. Dadurch ließe sich aber insbesondere im Stack nicht mehr die unbedingt einzuhaltende notwendige exakte Kluppenteilung, d.h. ein exakt gleicher Abstand von Kluppe zu Kluppe einstellen, da dieser dann von den Vorschubkräften mit abhängig wäre und dadurch wiederum unzulässige Veränderungen des Kluppenabstandes bedingt wären.

Aufgabe der vorliegenden Erfindung ist es von daher die Nachteile nach dem Stand der Technik zu überwinden und eine verbesserte Stoßdämpfervorrichtung insbesondere für simultane Reckanlagen mit nicht durch Ketten verbundenen Kluppen zu schaffen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Durch die vorliegende Erfindung wird eine Stoßdämpfervorrichtung geschaffen, wie sie sich insbesondere für simultane Reckanlagen eignet, bei welcher die einzelnen Lauf-oder Kluppenwagen - welche mechanisch nicht miteinander verbunden sind - beispielsweise mittels eines Linearmotorantriebes angetrieben werden. Dabei erfüllt die erfindungsgemäße Stoßdämpfervorrichtung zahlreiche einen dauerhaften und sicheren Betrieb einer derartigen Reckanlage gewährleistende Anforderungen, nämlich:
- Ein weiches Abfangen von Lauf- oder Kluppenwagen, die mit geringer Differenzgeschwindigkeit aufeinander auflaufen. Dabei wird eine reversible Verformung unter diesen normalen Betriebsbedingungen bevorzugt, um ohne weitere technische Maßnahmen einen möglichst langen Dauerbetrieb zu gewährleisten.
- Auch bei großen Differenzgeschwindigkeiten wird eine Aufnahme hoher dynamischer Energien ohne jede Beschädigung der Laufrollen, der Schiene oder Kluppen, d.h. also der Lauf- oder Kluppenwagen überhaupt gewährleistet, und dies ebenfalls bevorzugt wieder im Sinne einer reversiblen Aufnahme dieser dynamischen Kräfte und Energien.
- Aber auch bei hohen Differenzgeschwindigkeiten kann neben der Stoßdämpfung durch die Energieaufnahme durch die Federeinrichtungen (einer ersten sowie einer zweiten Stoßdämpfereinrichtung) zudem eine Dämpfung des Stoßes zusätzlich durch Energieumformung realisiert werden.
- Vor der unmittelbaren Reckzone (Stack) läßt sich durch die Begrenzung der Federkraft des Dämpfers auf eine maximale Dämpfkraft die gewünschte exakte Kluppenteilung, d.h. ein exakt gleichbleibender Abstand von Kluppe zu Kluppe vor der Reckzone reproduzierbar einhalten.
- In einer bevorzugten Ausführungsform der Erfindung ist ebenfalls gewährleistet, daß die Stoßdämpfervorrichtung auch in Kurven und Umkehrungen gleichsam wirksam ist.
- Selbst bei routinemäßiger Wartung oder im Reparaturfall überhaupt erlaubt die erfindungsgemäße Stoßdämpfervorrichtung eine leichte Austauschbarkeit der bei der Kollision eventuell in Mitleidenschaft gezogenen Prallteile.

Die erfindungsgemäße Stoßdämpfervorrichtung eignet sich insbesondere für Laufwagen für simultane Reckanlagen. Die Stoßdämpfervorrichtung ist aber auch für alle anderen vor Kollisionen zu schützenden Wagen geeignet, unabhängig davon, ob sie schienengebunden sind oder nicht oder durch andere Leit- oder Führungseinrichtungen verfahren werden. Der Begriff ʺLaufwagen" ist also nicht nur im Sinne eines mit Laufrollen ausgestatteten Wagens einschränkend zu verstehen. Auch aufgehängte, schwebende oder gleitende Anordnungen sind unter dem Begriff ʺLaufwagen" ebenso zu verstehen.

Weitere Vorteile, Einzelheiten und Merkmale der Erfindung ergeben sich nachfolgend aus dem anhand von Zeichnungen dargestellten Ausführungsbeispiel. Dabei zeigen im einzelnen:
- Figur 1 :: einen längs einer Laufschiene verfahrbaren Laufwagen in Parallelansicht zur Laufschiene;
- Figur 2 :: eine Draufsicht auf zwei längs einer Laufschiene im Abstand zueinander verfahrbare Laufwagen;
- Figur 3 :: eine vergrößerte Detaildarstellung der Stoßdämpfervorrichtung an einem Laufwagen;
- Figur 4 :: eine Schnittdarstellung längs der Linie IV - IV in Figur 3;
- Figur 5 :: eine zu Figur 4 entsprechende Darstellung zur Erläuterung der Montage der erfindungsgemäßen Stoßdämpfervorrichtung;
- Figur 6 :: eine schematische Schnittdarstellung durch zwei Stoßdämpfervorrichtungen an zwei nicht aufgelaufenen Laufwagen;
- Figur 7 :: eine zu Figur 6 entsprechende Darstellung, bei der der nachlaufende Laufwagen auf einen vorausgehenden Laufwagen unter Aktivierung der ersten Stoßdämpfereinrichtung aufgelaufen ist;
- Figur 8 :: eine zu Figur 6 und 7 entsprechende Darstellung der Stoßdämpfereinrichtung, bei der auch die zweite vorgesehene Stoßdämpfereinrichtung maximal verformt ist;
- Figur 9 :: eine Darstellung zur Erläuterung der Funktionsweise der erfindungsgemäßen Stoßdämpfervorrichtung in Kurven und Umkehrungen; und
- Figur 10 :: ein Diagramm mit drei Zustandsdarstellungen zur Erläuterung der Feder-DämpferKennlinie (die Darstellung zeigt die Federkraft F gegenüber dem Federweg FW in mm).

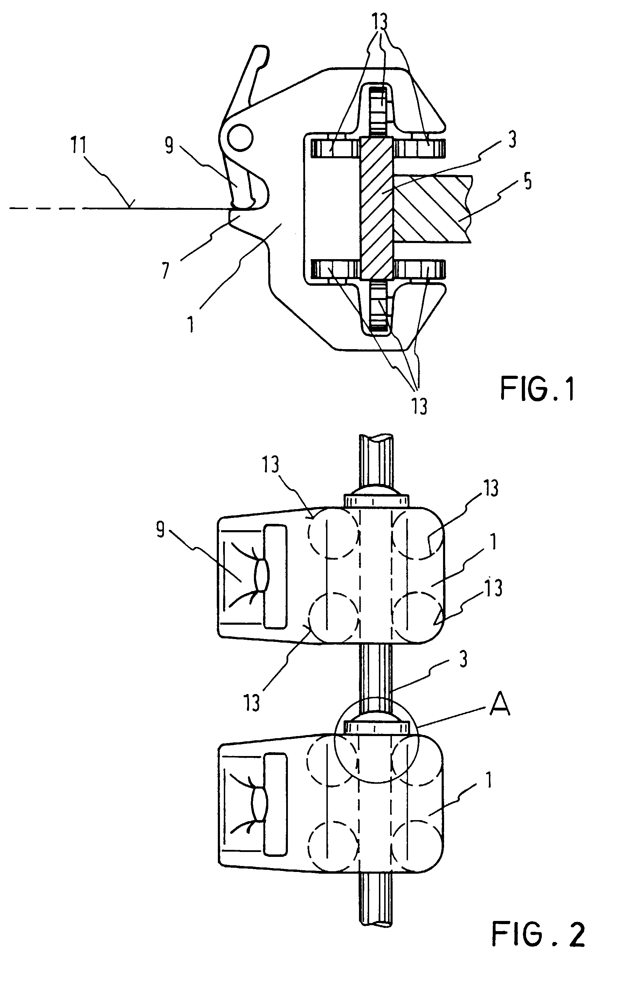

In den Figuren 1 bis 3 ist ein nachfolgend auch als Laufwagen 1 bezeichneter Kluppenwagen gezeigt, der längs einer im gezeigten Ausführungsbeispiel im Querschnitt rechteckigen Laufschiene 3, die an einem seitlichen ausschnittsweise gezeigten Träger 5 gehalten und verankert ist, verfahren wird. Die Laufwagen 1 umfassen bekanntermaßen z.B. einen Kluppentisch 7, auf welchem mittels einem bewegbaren Kluppenhebel 9 der Rand einer zu reckenden Folienbahn 11 erfaßt und festgehalten werden kann.

Das erläuterte Ausführungsbeispiel betrifft Laufwagen 1 mit Kluppen, wie sie z. B. für eine simultane Kunststofffolien-Reckanlage eingesetzt werden. Die einzelnen Laufwagen 1 sind bei dem erläuterten Ausführungsbeispiel nicht über einen Kettenhebelmechanismus miteinander verbunden, worüber der Kluppenabstand eingestellt wird, sondern werden demgegenüber z. B. mittels eines Linearmotorantriebes auf ihre Umlaufbahn längs der Laufschiene 3 mit sich veränderndem Abstand zu einem benachbarten Laufwagen gesteuert angetrieben. Die Laufwagen 1 umfassen horizontale und vertikale Laufrollen 13, worüber sie längs der Schiene 3 abrollen und verfahren werden.

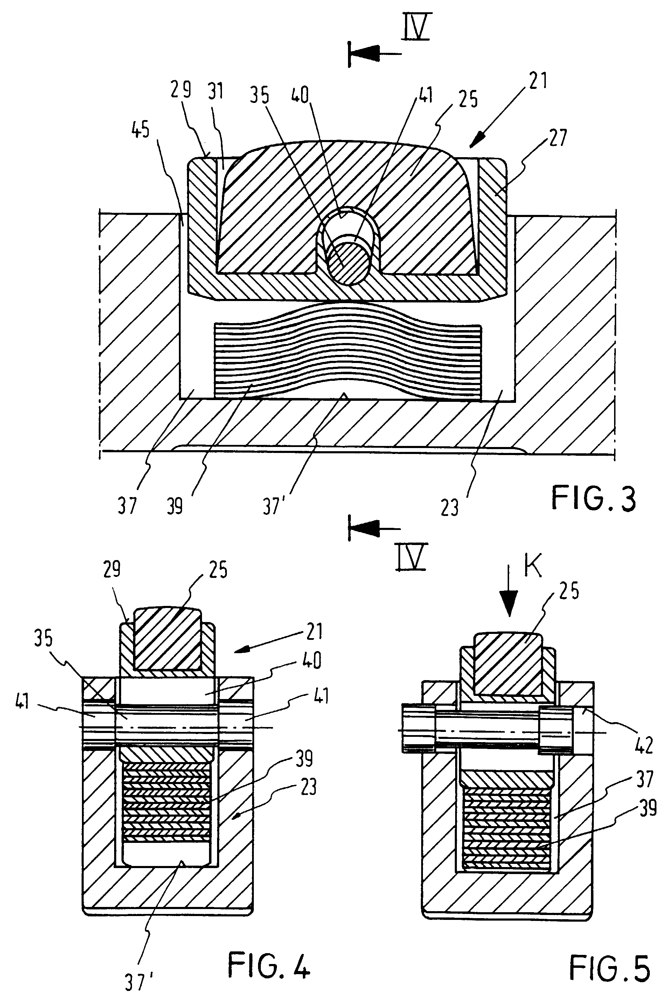

In Figur 3 bis 5 ist nunmehr die in Figur 2 mit einem strichpunktierten Kreis A gekennzeichnete Stoßdämpfervorrichtung im schematischen Querschnitt gezeigt.

Daraus ist ersichtlich, daß die Dämpfervorrichtung einen zweistufigen Aufbau mit einer ersten Stoßdämpfer-Einrichtung 21 und mit einer zweiten Stoßdämpfer-Einrichtung 23 umfaßt.

Die erste Stoßdämpfer-Einrichtung 21 weist einen Elastomereinsatz 25 auf, der in einem topfförmigen Einsatz-Aufnahmeteil 27 angeordnet ist.

Im unbelasteten Zustand steht der Elastomereinsatz 25 über den Rand 29 des topfförmigen Einsatz-Aufnahmeteils 27 über, wobei der Rand 29 gleichzeitig einen nachfolgend ebenfalls mit dem Bezugszeichen 29 gekennzeichneten Anschlag bildet (auf dessen Bedeutung später noch eingegangen wird).

Die Formgebung des Elastomereinsatzes 25 ist derart, daß zwischen der Innenwandung des topfförmigen Einsatz-Aufnahmeteils 27 zumindest benachbart zu seinem Rand 29 und der angrenzenden Wand des Elastomereinsatzes 25 ein im unbelasteten Zustand freier Aufnahmeraum 31 gebildet ist, in welchem das vorzugsweise volumenverformbare Elastomerelement im Falle einer Kollision mit einem benachbarten Laufwagen hinein verformt werden kann.

Das topfförmige Einsatz-Aufnahmeteil 27 (welches in Draufsicht nicht nur zwingend rund, sondern z. B. auch quadratisch oder rechteckförmig oder davon abweichend geformt sein kann) ist mittels eines Haltebolzens 35 in einen entsprechenden Aufnahmeraum 37 eintauchend und aus diesem vorstehend untergebracht.

Wie aus der Darstellung gemäß Figur 3 bis 5 hervorgeht, ist in dem Aufnahmeraum 37 die zweite Stoßdämpfereinrichtung 23 vorgesehen, die bevorzugt aus einem Blattfederpaket 39 besteht, welches sich am Boden 37' des Aufnahmeraumes abstützt und die Unterseite des topfförmigen Einsatz-Aufnahmeteils 27 bereits im unbelasteten Ausgangszustand druckbeaufschlagt und darüber das topfförmige Einsatz-Aufnahmeteil 27 in die in Figur 3 und 4 gezeigte abschlagsbegrenzte Ausgangsstellung drückt. In dieser Ausgangsstellung ist das topfförmige Einsatz-Aufnahmeteil 27 an den durch den Haltebolzen 35 gebildeten Anschlag gedrückt.

Aus den Figuren 4 und 5 ist die Montage des topfförmigen Einsatz-Aufnahmeteils 27 ersichtlich.

Das Einsatz-Aufnahmeteil 27 weist eine im Querschnitt in den Figuren 3 bis 5 gezeigte birnenförmige, d.h. in Richtung von dem Blattfederpaket 39 weg verlaufend mit erweiterter Kulisse 40 gebildete Bohrung auf. Der Haltebolzen 35 weist an seinen gegenüberliegenden Stirnseiten jeweils einen Bund 41 mit größerem Außendurchmesser als in seinem Mittelabschnitt auf, wobei der Außendurchmesser des Bundes 41 kleiner oder gleich dem erweiterten Bohrungsquerschnitt 40 ist. Zur Montage wird das topfförmige Einsatz-Aufnahmeteil 27 entgegen der Kraft des Blattfederpaketes 39 in den Aufnahmeraum 37 im Laufwagen 1 in Pfeilrichtung K eingedrückt, bis die Blattfedern 39 planparallel zum Boden 37' liegen. In dieser in Figur 5 gezeigten Stellung kann dann der Haltebolzen 35 durch den erweiterten Bohrungsquerschnitt 40 eingesteckt werden. Anschließend kann das Blattfederpaket 39 entlastet werden, wodurch das topfförmige Einsatz-Aufnahmeteil 27 von seiner in Figur 5 gezeigten Montagestellung in die in Figur 3 und 4 gezeigte neutrale Ausgangsstellung verschoben wird. Dabei wird das Einsatz-Aufnahmeteil 27 durch das Blattfederpaket 39 wieder entgegen der Pfeilrichtung K von der in Figur 5 gezeigten in die in Figur 4 anschlagsbegrenzte Ausgangsstellung verschoben, in welcher der Haltebolzen 35 den Bohrungsabschnitt 40 mit kleinerem Bohrradius durchsetzt, wobei in dieser Stellung die erwähnten stirnseitig außenliegenden Bundabschnitte 41 diesen verringerten Bohrradius außerhalb des Einsatz- und Aufnahmeteiles 27 überdecken und dadurch der Haltebolzen 35 axial unverschieblich gehalten ist. Der jeweils stirnseitig vorgesehene Bund 41 kommt dann in einer entsprechend passenden und die Lage des Haltebolzens 35 bestimmenden Bohrung 42 in den entsprechenden Wandungsabschnitten des Laufwagens 1 zu liegen.

Aus Figur 3 ist auch ersichtlich, daß zwischen dem Außenrand des topfförmigen Aufnahmeteiles 27 und der Innenwand des Aufnahmeraums 37 quer zur Axialrichtung des Haltebolzens 35 ein Abstand 45 besteht, wodurch eine entsprechende Einstellung des Dämpfungselementes in Anpassung an den jeweiligen Kollisionswinkel verbessert wird, worauf nachfolgend noch eingegangen wird.

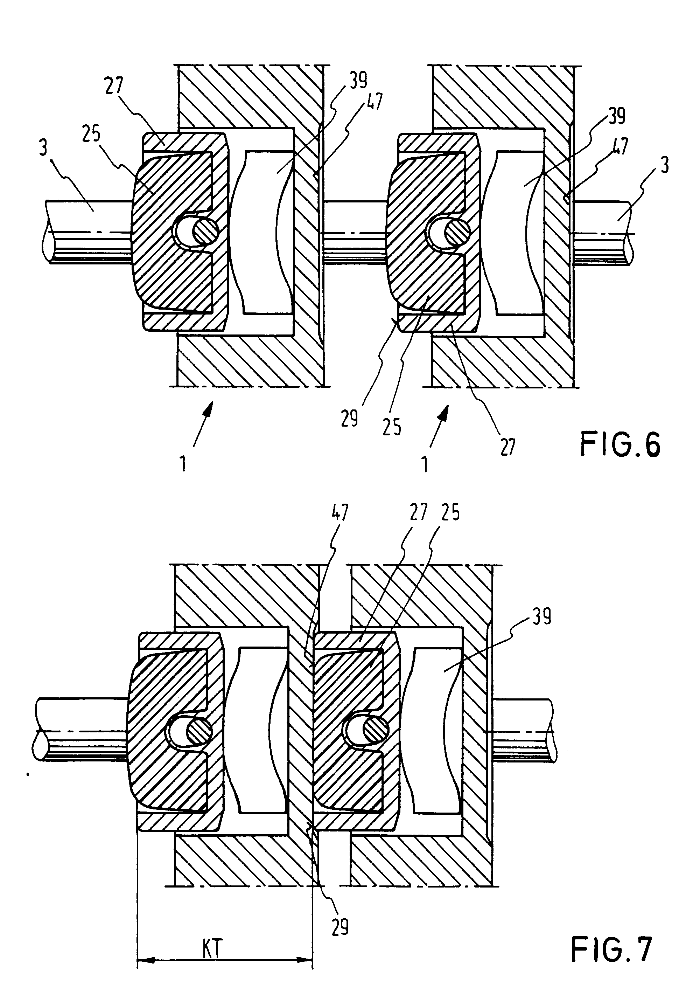

Im Vor- und Rücklauf einer Reckanlage, abgesehen vom Stack, werden die einzelnen Laufwagen 1, wie in Figur 6 dargestellt, kollisionsfrei mit sich veränderndem Abstand entsprechend den Reckbedingungen vorbewegt.

Figur 7 zeigt die Situation, bei welcher ein nachlaufender Laufwagen 1 auf einen vorausfahrenden Laufwagen 1 auffährt, wobei der Elastomereinsatz 25 komprimiert bzw. volumenverformt wird, bis der einen Anschlag bildende Rand 29 des topfförmigen Einsatz-Aufnahmeteils 27 auf der rückwärtigen Prallfläche 47 des vorauslaufenden Laufwagens 1 anschlägt. Es handelt sich hierbei um die erste der zweistufigen Dämpfungswirkung, worüber Stöße bei vergleichsweise geringer Differenzgeschwindigkeit zwischen zwei Laufwagen reversibel aufgenommen und gedämpft werden.

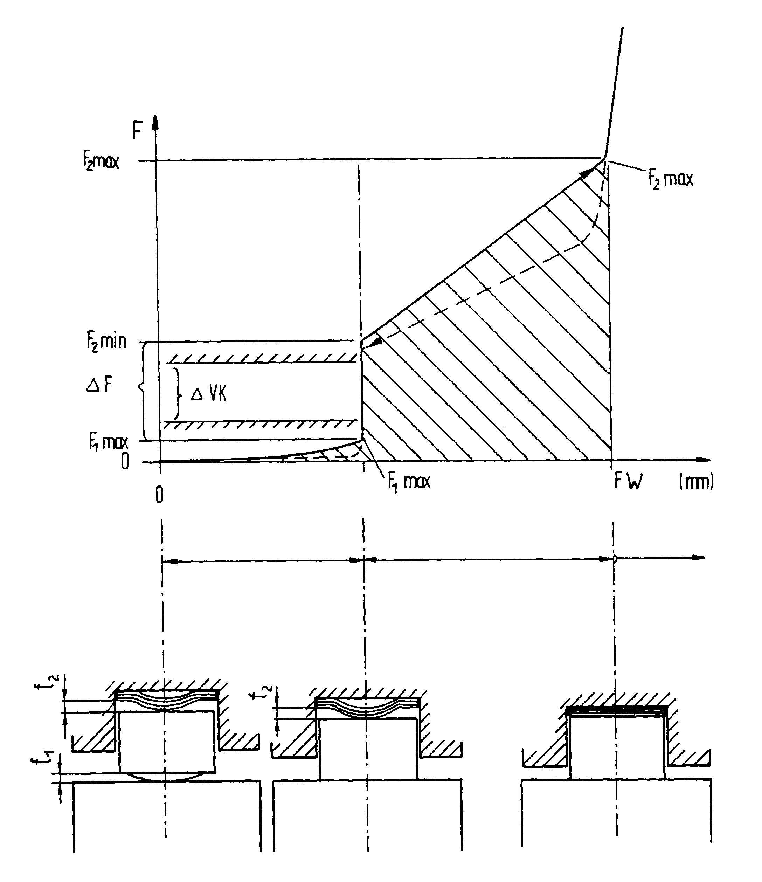

Wie anhand des Diagramms gemäß Figur 10 ersichtlich ist, wird der Elastomereinsatz 25 bereits bei einer Kraft F₁ₘₐₓ völlig in das topfförmige Einsatz-Aufnahmeteil 27 hineingedrückt, so daß bei dem daraufhin erfolgenden Anschlag des Randes 29 an der rückwärtigen Prallfläche 47 eines vorausfahrenden Laufwagens 1 eine weitere Verformung des Elastomereinsatzes 25 unterbunden wird.

Die dazu benötigte maximale Kraft F₁ₘₐₓ ist deutlich geringer, als die Vorschubkraft in der der Reckzone vorgelagerten Stack-Zone. Dadurch wird die in Figur 7 angedeutete exakte Kluppenteilung KT, also der exakte Abstand von Kluppe zu Kluppe in der Stack-Zone, stets reproduzierbar eingehalten.

Bei höheren Auflaufkräften wirkt die zweite Stoßdämpfer-Einrichtung 23. Diese nimmt die höheren Auflaufkräfte aber erst bei Überschreiten einer minimalen Kraft F₂ₘᵢₙ auf (Figur 10). Die Federn des Kraftspeichers 39 sind also mit einer so hohen Vorspannung ausgelegt, daß die in der Stack-Zone vorhandenen Vorschubkräfte stets sicher und eindeutig unterhalb der Vorspannkraft F₂ₘᵢₙ liegen und damit ein Verschieben des topfförmigen Einsatz-Aufnahmeteils 27 entgegen der Kraft des Blattfederpaketes 39 verhindern. Der ,,Kraftsprung" ΔF am Ende des Wirksamkeitsbereiches der ersten Stoßdämpfer-Einrichtung 21 und vor Beginn des Wirksamwerdens der zweiten Stoßdämpfer-Einrichtung 23 ist also gemäß der Darstellung nach Figur 10 deutlich größer als die im Stack-Bereich auftretenden Vorschubkräfte zwischen den Laufwagen. Dadurch läßt sich die exakte Kluppeneinteilung KT im Stack-Bereich vor Beginn der Reckzone eindeutig reproduzierbar und exakt einstellen.

In Figur 10 ist ferner noch der Kraftbereich ΔVK eingezeichnet, der den unteren und oberen Grenzwert der im Stack-Bereich auftretenden Vorschubkräfte VK beschreibt.

Die beiden Stoßdämpfereinrichtungen 21 und 23 arbeiten federnd, insbesondere reversibel federnd. Sie können dabei auch dämpfend wirken, d.h. Energie, also Stoßenergie aufnehmen und zumindest teilweise durch Energieumwandlung (beispielsweise Wärme etc.) abführen. Im erläuterten Ausführungsbeispiel wird die Dämpfung bei der Stoßdämpfereinrichtung 21 durch innere Reibung im Elastomereinsatz 25 erreicht. Bei der Stoßdämpfereinrichtung 23 wird die Dämpfung durch die Reibung zwischen den einzelnen Blattfedern des Blattfederpaketes 39 bewerkstelligt. Die Dämpfungsenergie ist im Diagramm gemäß Figur 10 angedeutet. Sie entspricht dabei der Fläche, die von der durchgezogenen Linie (Einfedern der betreffenden Stoßdämpfereinrichtung) und der gestrichelten Linie (Ausfedern der betreffenden Stoßdämpfereinrichtung) eingeschlossen ist.

Im Gegensatz zu der leicht ansteigenden Kennlinie der ersten Stoßdämpfereinrichtung 21 verläuft die Kennlinie der Stoßdämpfereinrichtung 23 mit vergleichsweise gleichbleibender und größerer Steigung bis zu einer maximalen Kraft F₂ₘₐₓ, bei welcher das Blattfederpaket 39 vollständig durchgedrückt ist und die unterste Blattfeder auf dem Boden 37' des Aufnahmeraumes 37 anliegt. Bei noch größeren Stoßkräften könnte dann eine dritte Stoßdämpfer-Einrichtung aktiv werden, die beispielsweise konstruktiv bedingt durch die Kluppenstruktur ermöglicht wird. Der Aufnahmeraum 37 der zweiten Stoßdämpfereinrichtung 23 kann dabei kluppenstrukturbedingt zumindest leicht federnd gegenüber dem verbleibenden Teil des Laufwagens 1 ausgebildet sein, um noch höhere Stoßkräfte aufzunehmen.

Diese sog. dritte Stoßdämpfer-Einrichtung kann so ausgelegt sein, daß sie erst nach Erreichen der Kraft F₂ₘₐₓ, also am Ende des Wirksamkeitsbereiches der zweiten Stoßdämpfer-einrichtung wirksam wird. Sie kann aber auch abweichend davon bereits bei Kräften wirksam werden, die zumindest geringfügig unterhalb der Kraft F₂ₘₐₓ liegen. Die Stoßaufnahme soll auch in diesem dritten Stoßdämpfer-Bereich bevorzugt reversibel und - wenn möglich - sogar dämpfend erfolgen.

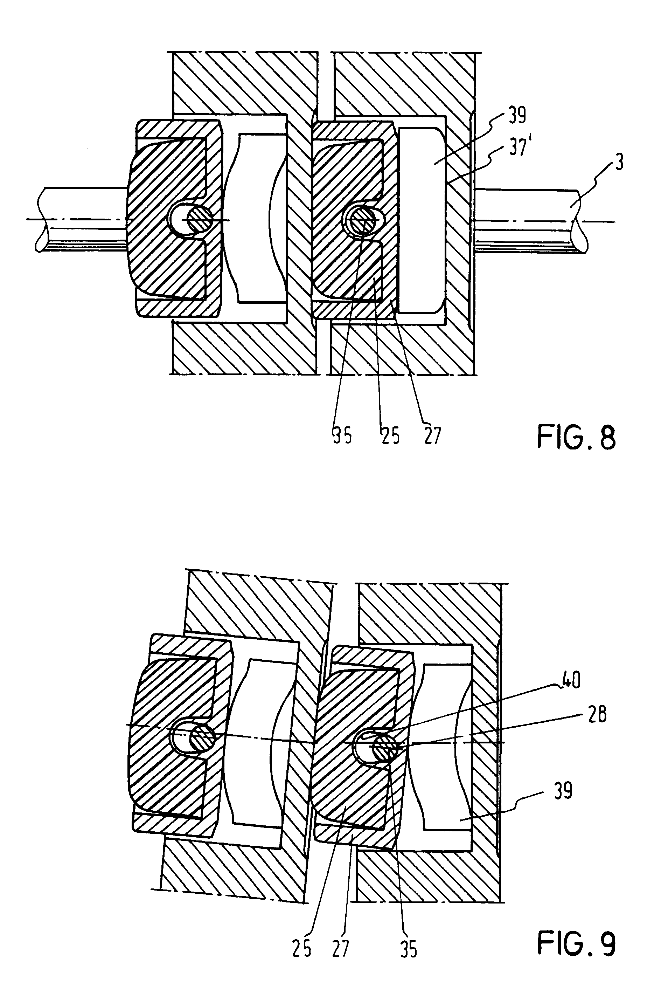

Um die erwähnte Stoßeinleitung in das Prallelement auch in Kurven zu verbessern, kann die als topfförmiges Einsatz-Aufnahmeteil 27 bezeichnete Aufnahmehülse um den erwähnten Haltebolzen 35 zumindest in einem geringen Winkelbereich verschwenkt werden, um sich dadurch auf den Kollisionswinkel einzustellen, wie dies schematisch anhand von Figur 9 gezeigt ist. Durch die bereits erwähnte konische Aufweitung der Kulisse 40 gegenüberliegend zu einem Anschlag 28 am Haltebolzen 35 (an welchem das topfförmige Einsatz-Aufnahmeelemente 27 anschlägt), wird die Belastung des Haltebolzens 35 bei einem schiefen Stoß vermieden. Die Gestaltung und Ausrichtung der Blattfedern 39 ist so vorgenommen, daß der konvex vorstehende Teil der Blattfedern 39 auf der Unterseite des Einsatz-Aufnahmeteiles 27 bevorzugt in dessem mittleren Bereich benachbart zum Haltebolzen 35 anliegt. Dadurch setzen die Blattfedern der Schwenkbewegung des topfförmigen Einsatz-Aufnahmeteils 27 verhältnismäßig geringen Widerstand entgegen, der aber zumindest noch so groß ist, daß nach erfolgtem Stoß bei Geradeausfahrt wieder eine Rückstellbewegung des topfförmigen Einsatz-Aufnahmeteils 27 in die in Figur 3 gezeigte neutrale Ausgangsstellung gewährleistet ist.

Die erfindungsgemäße Stoßdämpfervorrichtung für Laufwagen, insbesondere für eine simultane Reckanlage, weist also einen zumindest zweistufigen Dämpferaufbau unter Verwendung einer ersten und zweiten Stoßdämpfer-Einrichtung 21, 23 auf, wobei die zweite Stoßdämpfer-Einrichtung erst nach Überschreiten einer Auslöse-Grenzkraft F₂ₘᵢₙ aktivierbar ist, diese Stoßdämpfervorrichtung zeichnet sich vor allem durch die folgenden Merkmale aus:
- die erste Stoßdämpfer-Einrichtung 21 weist einen Elastomereinsatz 25 auf, der über einen einen Anschlag 29 bildenden Rand eines Einsatz-Aufnahmeteiles 27 übersteht, wobei der Elastomereinsatz 25 bei Überschreiten einer Grenzkraft F₁ₘₐₓ bis auf die Ebene des Anschlags 29 komprimiert und/oder volumenverformt wird,
- die zweite Stoßdämpfer-Einrichtung 23 besteht aus einer Druckfedereinrichtung 39, die erst nach Überschreiten der Auslöse-Grenzkraft F₂ₘᵢₙ aktivierbar ist, und
- die erste und zweite Stoßdämpfer-Einrichtung 21, 23 sind so aufgebaut, daß ein Kraftsprung ΔF zwischen der Grenzkraft F₁ₘₐₓ am Ende des Wirksamkeitsbereiches der ersten - Stoßdämpfer-Einrichtung 21 und der Auslöse-Grenzkraft F₂ₘᵢₙ am Beginn des Wirksamwerdens der zweiten Stoßdämpfer-Einrichtung 23 vorhanden ist, der der exakten Anlage und damit einem definierten Abstand der Laufwagen 1 dient, die die Stoßdämpfervorrichtung im Normalbetrieb in einem Kraftbereich ΔVK oberhalb der Grenzkraft F₁ₘₐₓ und unterhalb der Auslöse-Grenzkraft F₂ₘᵢₙ belasten.

## Patentansprüche

1. Stoßdämpfervorrichtung für Laufwagen (1), insbesondere für eine simultane Reckanlage, mit einem zumindest zweistufigen Dämpferaufbau unter Verwendung einer ersten und zweiten Stoßdämpfer-Einrichtung (21, 23), wobei die zweite Stoßdämpfer-Einrichtung (23) erst nach Überschreiten einer Auslöse-Grenzkraft aktivierbar ist, **gekennzeichnet durch** die folgenden weiteren Merkmale
- der Feder-Kennlinien-Verlauf der ersten und zweiten Stoßdämpfer-Einrichtung (21, 23) erfolgt nach Art einer Sprungfunktion derart, daß der minimale Grenz-Auslösewert (F₂ₘᵢₙ), bei welcher die zweite Stoßdämpfer-Einrichtung (23) aktiverbar ist, um einen Kraft-Differenzwert (ΔF) oberhalb des Kraft-Begrenzungswertes (F₁ₘₐₓ) liegt, bei welchem die erste Stoßdämpfer-Einrichtung (21) bei Erreichen ihres maximalen Stoßdämpfungswertes deaktiviert ist, und
- die Vorschubkraft (VK), mittels der die Laufwagen (1) in einem Vorschubbereich (Stack-Bereich) unter Ausübung von Vorschubkräften vorwärts bewegt werden, ist größer als der Grenzkraftwert (F₁ₘₐₓ) am Ende des Wirksamkeitsbereiches der ersten Stoßdämpfer-Einrichtung (21) und kleiner als der Grenzkraftwert (F₂ₘᵢₙ) am Beginn des Wirksamkeitsbereiches der zweiten Stoßdämpfer-Einrichtung (23).

2. Stoßdämpfervorrichtung nach Anspruch 1, **dadurch gekennzeichnet,** daß auch die zweite Stoßdämpfer-Einrichtung (23) in ihrem Funktionsbereich reversibel arbeitet.

3. Stoßdämpfervorrichtung nach Anspruch 1 oder 2, **dadurch gekennzeichnet**, daß die erste und/oder die zweite Stoßdämpfer-Einrichtung (21, 23) energieumformende Dämpfungselemente umfassen.

4. Stoßdämpfervorrichtung nach einem der Ansprüche 1 bis 3, **dadurch gekennzeichnet,** daß zumindets eine der beiden Stoßdämpfer-Einrichtungen (21, 23) relativ zu der anderen Stoßdämpfer-Einrichtung (23, 21) kippbar ist.

5. Stoßdämpfervorrichtung nach Anspruch 4, **dadurch gekennzeichnet,** daß die erste Stoßdämpfer-Einrichtung (21) um einen Haltebolzen (35) in Richtung eines gekrümmten Bahnverlaufes gegenüber der zweiten Stoßdämpfer-Einrichtung (23) zumindest geringfügig kippbar ist.

6. Stoßdämpfervorrichtung nach einem der Ansprüche 1 bis 5, **dadurch gekennzeichnet,** daß die erste Stoßdämpfer-Einrichtung (21) einen Elastomereinsatz (25) aufweist, der über einen einen Anschlag (29) bildenden Rand eines Einsatz-Aufnahmeteiles (27) übersteht, wobei der Elastomereinsatz (25) bei Überschreiten der Grenzkraft (F₁ₘₐₓ) bis auf die Ebene des Anschlages (29) komprimiert und/oder volumenverformt ist.

7. Stoßdämpfervorrichtung nach einem der Ansprüche 1 bis 6, **dadurch gekennzeichnet**, daß die zweite Stoßdämpfer-Einrichtung (23) aus einem Blattfederpaket (39) besteht.

8. Stoßdämpfervorrichtung nach Anspruch 7, **dadurch gekennzeichnet**, daß der konvex vorstehende Abschnitt des Blattfederpaketes (39) an der Unterseite der ersten Stoßdämpfer-Einrichtung (21) anliegt, und zwar vorzugsweise in dessem mittleren Bereich.

9. Stoßdämpfervorrichtung nach Anspruch 7 oder 8, **dadurch gekennzeichnet**, daß in kollisionsfreiem Zustand des Laufwagens (1) durch die zweite Stoßdämpfer-Einrichtung (23) Rückstellkräfte auf die erste Stoßdämpfer-Einrichtung (21) dergestalt einwirken, daß die erste, zumindest geringfügig verkippbare Stoßdämpfer-Einrichtung (21) in ihre neutrale in Geradeausrichtung ausgerichtete Ausgangslage verschwenkt gehalten ist.

10. Stoßdämpfervorrichtung nach einem der Ansprüche 1 bis 9, **dadurch gekennzeichnet**, daß die erste Stoßdämpfereinrichtung (21) eine Bohrung (40) aufweist, die durch einen, eine Kippachse zum Verkippen der ersten gegenüber der zweiten Stoßdämpfer-Einrichtung (21, 23) erlaubenden Haltebolzen (35) durchragt wird, wobei die Bohrung (40) in Querrichtung quer zur Kippachse in Richtung der Vorspannkräfte der zweiten Stoßdämpfer-Einrichtung (23) mit einem erweiterten Bohrungsabschnitt zur Ermöglichung einer Relativverschiebung der ersten Stoßdämpfer-Einrichtung (21) gegenüber der zweiten Stoßdämpfer-Einrichtung (23) versehen ist.

11. Stoßdämpfervorrichtung nach Anspruch 10, **dadurch gekennzeichnet**, daß der erweiterte Bohrungsabschnitt der Bohrung (40) im Querschnitt birnenförmig erweitert ist, so daß bei entgegen der Kraft der zweiten Stoßdämpfer-Einrichtung (23) verschobener erster Stoßdämpfer-Einrichtung (21) ein Haltebolzen durch die Bohrung (40) hindurchsteckbar ist, der stirnseitig mit einem überstehenden Bund versehen ist, dessen Außendurchmesser gleich oder kleiner dem erweiterten Bohrungsabschnitt (40) und größer als der demgegenüber mit geringerem Durchmesser versehene Bohrungsabschnitt der Bohrung (40) versehen ist.

12. Stoßdämpfervorrichtung nach einem der Ansprüche 1 bis 11, **dadurch gekennzeichnet,** daß zumindest eine dritte Stoßdämpfer-Einrichtung vorgesehen ist, die vorzugsweise durch die Laufwagenstruktur gebildet ist.

13. Stoßdämpfervorrichtung nach Anspruch 12, **dadurch gekennzeichnet,** daß auch die zumindest dritte Stoßdämpfer-Einrichtung zumindest in einem Belastungsbereich reversibel arbeitet und vorzugsweise stoßdämpfend wirkt.

## Claims

1. Shock absorber device for running trolleys (1), particularly for a simultaneous stretching plant, with an at least two-stage shock absorber design, using a first and a second shock absorber means (21, 23), the second shock absorber means (23) being activatable only after a release limit force is exceeded, characterized by the following further features
- the spring characteristic trend of the first and the second shock absorber means (21, 23) takes place in the manner of a jump function, in such a way that the minimum release limit value (F₂ₘᵢₙ), at which the second shock absorber means (23) can be activated, is a differential force value (ΔF) above the force limiting value (F₁ₘₐₓ), at which the first shock absorber means (21) is deactivated when its maximum shock absorption value is reached, and
- the propulsive force (VK), by means of which the running trolleys (1) are moved forward in an advance region (stack region) by the exertion of propulsive forces, is higher than the limit force value (F₁ₘₐₓ) at the end of the range of effectiveness of the first shock absorber means (21) and lower than the limit force value (F₂ₘᵢₙ) at the commencement of the range of effectiveness of the second shock absorber means (23).

2. Shock absorber device according to claim 1, characterized in that the second shock absorber means (23) too works reversibly in its operating range.

3. Shock absorber device according to claim 1 or 2, characterized in that the first and/or the second shock absorber means (21, 23) comprise energy-converting damping elements.

4. Shock absorber device according to one of claims 1 to 3, characterized in that at least one of the two shock absorber means (21, 23) is tiltable relative to the other shock absorber means (23, 21).

5. Shock absorber device according to claim 4, characterized in that the first shock absorber means (21) is at least slightly tiltable relative to the second shock absorber means (23) about a holding bolt (35) in the direction of a curved path.

6. Shock absorber device according to one of claims 1 to 5, characterized in that the first shock absorber means (21) has an elastomeric insert (25) which projects above an edge of an insertable reception part (27), said edge forming a stop (29), the elastomeric insert (25) being compressed and/or deformed in volume as far as the plane of the stop (29) when the limit force (F₁ₘₐₓ) is exceeded.

7. Shock absorber device according to one of claims 1 to 6, characterized in that the second shock absorber device (23) consists of a leaf spring assembly (39).

8. Shock absorber device according to claim 7, characterized in that the convexly projecting portion of the leaf spring assembly (39) bears on the underside of the first shock absorber means (21), specifically preferably in the middle region of the latter.

9. Shock absorber device according to claim 7 or 8, characterized in that, in the collision-free state of the running trolley (1), return forces act on the first shock absorber means (21) as a result of the second shock absorber means (23), in such a way that the first, at least slightly tiltable shock absorber means (21) is held pivoted into its neutral initial position oriented in straight alignment.

10. Shock absorber device according to one of claims 1 to 9, characterized in that the first shock absorber means (21) has a bore (40), through which projects a holding bolt (35) allowing a tilting axis for tilting the first shock absorber means (21) relative to the second shock absorber means (23), the bore (40) being provided in the transverse direction, transversely to the tilting axis and in the direction of the prestressing forces of the second shock absorber means (23), with a widened bore portion for allowing a relative displacement of the first shock absorber means (21) relative to the second shock absorber means (23).

11. Shock absorber device according to claim 10, characterized in that the widened bore portion of the bore (40) is widened in cross section in a pear-shaped manner, so that, when the first shock absorber means (21) is displaced counter to the force of the second shock absorber means (23), a holding bolt can be inserted through the bore (40), said holding bolt being provided on the end face with a projecting collar, the outside diameter of which is equal to or smaller than the widened bore portion (40) and larger than that bore portion of the bore (40) which is provided with a smaller diameter in relation to said widened bore portion.

12. Shock absorber device according to one of claims 1 to 11, characterized in that at least a third shock absorber means, which is preferably formed by the running trolley structure, is provided.

13. Shock absorber device according to claim 12, characterized in that the at least third shock absorber means too works reversibly, at least in a load range, and preferably has a shock-absorbing effect.

## Revendications

1. Dispositif d'amortissement pour chariots (1), en particulier d'une installation d'étirage simultané, comportant une structure d'amortisseur à au moins deux étages qui recourt à un premier et à un deuxième dispositif d'amortissement (21, 23), où le deuxième dispositif d'amortissement (23) ne pouvant entrer en action qu'après dépassement d'une force limite de déclenchement, caractérisé par les autres particularités ci-dessous:
- l'allure de la ligne caractéristique de ressort du premier et du deuxième dispositif d'amortissement (21, 23) est du type d'une fonction de saut, telle que la valeur minimale de déclenchement limite (F₂ₘᵢₙ) à laquelle le deuxième dispositif d'amortissement (23) peut entrer en action, dépasse d'une valeur (ΔF) de différence de force la valeur limite de la force (F₁ₘₐₓ) à laquelle le premier dispositif d'amortissement (21) est désactivé lorsque sa valeur maximale d'amortissement est atteinte, et
- la force d'avancement (VK) par laquelle les chariots (1) sont déplacés vers l'avant dans une région d'avancement (région d'accumulation) par l'action de forces d'avancement est supérieure à la valeur de la force limite (F₁ₘₐₓ) à la fin de la plage d'action du premier dispositif d'amortissement (21) et inférieure à la valeur de la force limite (F₂ₘᵢₙ) au début de la plage d'action du deuxième dispositif d'amortissement (23).

2. Dispositif d'amortissement selon la revendication 1, caractérisé en ce que dans sa plage de fonctionnement, le deuxième dispositif d'amortissement (23) travaille également de manière réversible.

3. Dispositif d'amortissement selon les revendications 1 ou 2, caractérisé en ce que le premier et/ou le deuxième dispositif d'amortissement (21, 23) comportent des éléments d'amortissement à conversion d'énergie.

4. Dispositif d'amortissement selon l'une des revendications 1 à 3, caractérisé en ce qu'au moins l'un des deux dispositifs d'amortissement (21, 23) peut pivoter par rapport à l'autre dispositif d'amortissement (23, 21).

5. Dispositif d'amortissement selon la revendication 4, caractérisé en ce que le premier dispositif d'amortissement (21) peut pivoter au moins légèrement autour du boulon de retenue (35) par rapport au deuxième dispositif d'amortissement (23), dans la direction d'une trajectoire courbe.

6. Dispositif d'amortissement selon l'une des revendications 1 à 5, caractérisé en ce que le premier dispositif d'amortissement (21) présente une garniture (25) en élastomère, qui déborde au-dessus du bord, formant butée (29), d'une partie de réception de garniture (27), la garniture (25) en élastomère étant comprimée et/ou déformée en volume jusque dans le plan de la butée (29) lorsque la force limite (F₁ₘₐₓ) est dépassée.

7. Dispositif d'amortissement selon l'une des revendications 1 à 6, caractérisé en ce que le deuxième dispositif d'amortissement (23) est constitué d'une garniture de lames de ressort (39).

8. Dispositif d'amortissement selon la revendication 7, caractérisé en ce que la partie convexe en saillie de la garniture de lames de ressort (39) repose contre la face inférieure du premier dispositif d'amortissement (21), et ce de préférence dans sa partie centrale.

9. Dispositif d'amortissement selon les revendications 7 ou 8, caractérisé en ce que lorsque le chariot (1) n'est pas en collision, des forces de rappel exercées par le deuxième dispositif d'amortissement (23) agissent sur le premier dispositif d'amortissement (21) de telle sorte que le premier dispositif d'amortissement (21), capable de pivoter au moins légèrement, est maintenu incliné dans sa position neutre initiale, orientée en ligne droite.

10. Dispositif d'amortissement selon l'une des revendications 1 à 9, caractérisé en ce que le premier dispositif d'amortissement (21) présente un alésage (40) qui est traversé par un boulon de retenue (35) foumissant un axe de pivotement pour que le premier dispositif d'amortissement (21) puisse pivoter par rapport au deuxième dispositif d'amortissement (23), l'alésage (40) étant doté d'une partie d'alésage évasée dans la direction transversale par rapport à l'axe d'inclinaison, dans la direction des forces de précontrainte du deuxième dispositif d'amortissement (23), en vue de permettre un déplacement relatif du premier dispositif d'amortissement (21) par rapport au deuxième dispositif d'amortissement (23).

11. Dispositif d'amortissement selon la revendication 10, caractérisé en ce que la partie évasée de l'alésage (40) a une section transversale évasée en forme de poire, de telle sorte que lorsque le premier dispositif d'amortissement (21) est avancé en opposition à la force du deuxième dispositif d'amortissement (23), un boulon de retenue puisse sortir par l'alésage (40), lequel boulon de retenue est doté d'un épaulement en saillie dont le diamètre externe est égal ou inférieur à la partie évasée de l'alésage (40), et supérieur à la partie de l'alésage (40) dont le diamètre est plus petit.

12. Dispositif d'amortissement selon l'une des revendications 1 à 11, caractérisé en ce qu'au moins un troisième dispositif d'amortissement est prévu, qui est de préférence formé par la structure du chariot.

13. Dispositif d'amortissement selon la revendication 12, caractérisé en ce qu'au moins dans une plage de sollicitation, le troisième dispositif d'amortissement au moins prévu travaille de manière réversible et exerce de préférence une action d'amortissement.
